# EUROPÄISCHE PATENTSCHRIFT

(11) **EP 2 178 630 B1**
(45) Veröffentlichungstag und Bekanntmachung des Hinweises auf die Patenterteilung: **13.03.2013**
(21) Anmeldenummer: 08782815.8
(22) Anmeldetag: 14.08.2008
(51) Int. Cl.: B01J 8/26

(54) **WIRBELSCHICHTREAKTORSYSTEM**
FLUIDIZED BED REACTOR SYSTEM
SYSTÈME DE RÉACTEURS À LIT FLUIDISÉ

(30) Priorität: 14.08.2007 AT 12722007
(43) Veröffentlichungstag der Anmeldung: 28.04.2010
(73) Patentinhaber: Technische Universität Wien, 1040 Wien (AT)
(72) Erfinder: PRÖLL, Tobias, A-1140 Wien (AT); KOLBITSCH, Philipp, A-1180 Wien (AT); BOLHAR-NORDENKAMPF, Johannes, A-1190 Wien (AT); HOFBAUER, Hermann, A-1160 Wien (AT)
(74) Vertreter: Ellmeyer, Wolfgang
(86) Internationale Anmeldenummer: PCT/AT2008/000287
(87) Internationale Veröffentlichungsnummer: WO 2009/021258

(56) Entgegenhaltungen:
- WO-A-2007/023590
- FR-A- 2 556 983
- GB-A- 2 159 432
- US-A- 4 076 796
- US-A- 4 947 804
- US-A- 6 083 862
- US-A- 6 143 915

## Beschreibung

Die vorliegende Erfindung betrifft das Gebiet der Gas-Feststoff-Reaktorsysteme, insbesondere der zirkulierenden Wirbelschichten.

Gas-Feststoffreaktoren werden eingesetzt, um einen Feststoff oder Teile des Feststoffes direkt an einer chemischen Umwandlung teilnehmen zu lassen, entweder als Reaktionspartner, als Katalysator oder als Wärmeträger. Gas-Feststoff-Reaktorsysteme mit zwei getrennten Reaktionszonen ermöglichen die Auftrennung auf zwei Gasreaktionsräume, die nur über den Feststoffstrom miteinander in Verbindung stehen, ohne dass es zu einer wesentlichen Vermischung der Gasströme kommt. Solche Anordnungen werden bereits auf mehreren Gebieten erfolgreich eingesetzt. Als Beispiele seien hier angeführt: Fast Catalytic Cracking in der Erdölaufbereitung, thermochemische Umwandlung von Festbrennstoffen in brennbare Gase (z.B. Kohle- oder Biomassevergasung bzw. -pyrolyse), Chemical Looping Combustion zur inherenten Abscheidung von Kohlendioxid bei der Verbrennung von kohlenstoffhaltigen Brennstoffen (US 2,665,972), Chemical Looping Reforming zur inherenten Abscheidung von Kohlendioxid bei der Bereitstellung von Synthesegas und Carbonate-Looping zur selektiven Absorption von CO₂ aus Gasströmen oder aus Verbrennungs- bzw. Vergasungsreaktoren (EP 1 637 574). Der Feststoff zirkuliert dabei von einer Reaktionszone in die andere und von dort in die erste zurück. Für die technische Ausführung solcher Reaktoren bestehen mehrere Möglichkeiten, wobei die zu erreichenden Verweilzeiten und die fluiddynamischen Eigenschaften der Wirbelschichten an die jeweilige Problemstellung anzupassen sind. Im Folgenden wird im Bezug auf die zwei genannten Reaktionszonen von zwei über den zirkulierenden Feststoffstrom verbundenen Wirbelschichtreaktoren gesprochen.

Der Begriff zirkulierende Wirbelschicht wird im Allgemeinen verwendet für einen (schnell) fluidisierten, feststofftransportierenden Wirbelschichtreaktor samt einer Einrichtung zur Feststoffabscheidung im austretenden Gasstrom (z.B. eine Fliehkraft - oder Schwerkraftabscheideranordnung). Es stehen ein austretender Gasstrom und ein abgeschiedener Feststoffstrom bereit. Der Feststoff wird in der klassischen Ausführung einer zirkulierenden Wirbelschicht wieder in den Wirbelschichtreaktor zurückgeleitet. Die ausgetragene Feststoffmenge wird häufig durch die Verteilung des an unterschiedlichen Stellen entlang der Reaktorhöhe eingebrachten Fluidisierungsgases (Gasvertrimmung) regelungstechnisch beeinflusst. Unter zirkulierender Wirbelschicht wird im Folgenden eine Wirbelschicht oder ein fluidisiertes Bett verstanden, in dem durch ein Fluid Partikel fluidisiert werden und nach Abtrennung des Fluids von den Partikeln diese zumindest zum Teil wieder in dieselbe oder aber in eine andere Wirbelschicht zurückgeführt werden. Vorzugsweise ist die zirkulierende Wirbelschicht eine turbulente oder schnelle Wirbelschicht.

Der Begriff stationäre Wirbelschicht beschreibt eine blasenbildend fluidisierte, nicht feststofftransportierende Wirbelschicht in einem Reaktor, bei dem ein etwaiger Feststoffabzug aus dem Wirbelbett erfolgen muss. Über dem Wirbelbett befindet sich ein nahezu feststofffreier Gasraum (Freiraum).

Zur Abdichtung der Gasräume zweier Wirbelschichtreaktoren zueinander werden generell fluidisierte Siphone oder fluidisierte Verbindungskanäle bzw. fluidisierte Rutschen und dgl. eingesetzt. Zur Fluidisierung dieser Verbindungs- bzw. Abdichtelemente kommen bevorzugt Fluide zum Einsatz, die in keinem der beiden Wirbelschichtreaktoren eine stark störende Wirkung haben. Ein Beispiel hierfür ist für zahlreiche Anwendungen Wasserdampf.

Es sind Reaktorsysteme bekannt, bei denen eine stationäre Wirbelschicht in die Feststoff-Rückführung einer klassischen zirkulierenden Wirbelschicht zwischengeschaltet ist (AT 405937 B, JP 2000/192056, Lyngfelt et al., Chemical Engineering Science 56 (2001), 3101-3113, EP 1 637 574). So beschreiben Lyngfelt et al. ein System eines Luft- und eines Brennstoffreaktors zwischen denen ein Metall/Metalloxid zyklisch ausgetauscht wird. Im Luftreaktor wird durch Oxidation des Bettmaterials ein Metalloxid gebildet, welches im Brennstoffreaktor unter Oxidation des Brennstoffs (z.B. gasförmiger Kohlenwasserstoff) wieder in die reduzierte Form übergeführt wird. In der Summenreaktion wird Brennstoff durch Luft verbrannt, wobei durch die Trennung der beiden Gasreaktoren die Abgase nicht vermischt werden. So wird einerseits Stickstoff mit einem Rest an Sauerstoff (Luftreaktor) und andererseits ein CO₂-Wassergemisch (Brennstofffreaktor) getrennt erhalten. Aufgrund der unterschiedlichen Gasdurchflussraten wird im Luftreaktor eine zirkulierende Wirbelschicht und im Brennstoffreaktor eine stationäre Wirbelschicht geführt.

Solche Anordnungen, bei denen eine stationäre Wirbelschicht in die Feststoff-Rückführung einer klassischen zirkulierenden Wirbelschicht zwischengeschaltet ist, erlauben einen robusten und partikelschonenden Betrieb, da der Aufenthaltsort des Großteils des Feststoffes im stationären Wirbelbett definiert ist und die Partikel im Laufe eines vollständigen Umlaufes nur einmal den Zyklon passieren. Allerdings sind solche Systeme wegen der Ausführung eines der beiden Reaktoren als stationäre Wirbelschicht bei sehr großen Anlagenkapazitäten nur bedingt einsetzbar, da die benötigten Reaktorquerschnitte im Bereich der stationären Wirbelschicht sehr groß werden. Wird im Prozess auf einen weitgehenden Umsatz des Fluidisierungsgases in Kontakt mit dem Feststoff abgezielt, weist die stationäre Wirbelschicht zusätzlich den Nachteil auf, dass Gas in der Blasenphase nur schlecht mit dem Feststoff in Kontakt gebracht wird und im Freiraum über dem stationären Wirbelbett nur mehr sehr geringe Feststoffkonzentrationen herrschen. Es besteht daher die Gefahr eines Schlupfes von nicht reagiertem Einsatz- bzw. Fluidisierungsgas.

Die DE 19 808 439 Cl (US 6,290,775) beschreibt die Verbindung zweier stationärer Wirbelschichten über ein Überlaufwehr für die Feststoffpartikel und mit einer Abdeckung im Gasraum um die Vermischung der Gasräume zu vermeiden.

Es sind auch Reaktorsysteme bekannt, die aus zwei oder mehreren in Verbindung stehenden zirkulierenden Wirbelschichten bestehen. Dabei wird bei manchen Anwendungen eine Behandlung des Feststoffes angestrebt und durch die Anordnung ein Stufenprinzip realisiert, wobei der Feststoff die Reaktoren nacheinander passiert ohne dass eine Rezirkulation des Feststoffes in den ersten Reaktor angestrebt wird (WO 98/30497, KR 2003 0020114). In anderen bekannten Anwendungen sind über zwei miteinander verbundene zirkulierende Wirbelschichtsysteme Feststoffschleifen realisiert. Dabei wird der ausgetragene und anschließend vom Gasstrom abgetrennte Feststoff in den jeweils anderen schnell fluidisierten Wirbelschichtreaktor geleitet (US 6,083,862 B1) oder über geeignete Vorrichtungen zur Auftrennung der im Fliehkraft- oder Schwerkraftabscheider abgetrennten Feststoffströme anteilsmäßig in den selben oder in den anderen schnell fluidisierten Wirbelschichtreaktor geleitet (WO 94/08194). Material kann dabei entweder nach einem Partikelabscheider oder über einen Partikelaustrag am Boden des Reaktors über eine pneumatische Fördereinrichtung in den jeweils anderen Reaktor geführt werden (GB 1 524 345). Solche Systeme weisen nicht das für die Anordnungen mit einer stationären Wirbelschicht beschriebene Skalierungsproblem auf und der Gas-Feststoffkontakt erfolgt in den schnell fluidisierten Reaktoren dabei über die gesamte Reaktorhöhe hinweg. Die Verwendung zweier schnell fluidisierte Wirbelschichtreaktoren in bekannter Weise erfordert aber die regelungstechnische Kontrolle des Aufenthaltsortes des Feststoffes im System, außerdem muss der Feststoff dabei im Laufe eines Umlaufzyklus mindestens zweimal ausgetragen und abgeschieden werden, was eine erhöhte mechanische Beanspruchung der Partikel darstellt.

Es ist das Ziel der vorliegenden Erfindung die Nachteile bisheriger Systeme zu überwinden und insbesondere ein Wirbelschichtreaktorsystem bestehend aus mindestens zwei zirkulierenden Wirbelschichtreaktoren zur Verfügung zu stellen, wobei der Feststofftransport der einzelnen Reaktoren unabhängig vom jeweils anderen Reaktor eingestellt werden kann- Damit kann der Gas-Feststoff-Kontakt in allen beteiligten Wirbelschichtreaktoren optimiert werden und gleichzeitig kann das Verfahren auf einen robusten, partikelschonenden Betrieb mit trotzdem hohen globalen Feststoffumlaufraten hin optimiert werden. Diese Vorteile wirken sich insbesondere bei einer Maßstabsvergrößerung der weiter
oben genannten Verfahren, die in bekannter Weise als Kombination aus einer zirkulierenden Wirbelschicht mit einer stationären Wirbelschicht ausgeführt sind, positiv aus, da auf die Ausführung der stationären Wirbelschicht zugunsten einer weiteren zirkulierenden Wirbelschicht verzichtet werden kann.

Die vorliegende Erfindung betrifft daher ein Wirbelschichtreaktorsystem bestehend aus mindestens zwei Wirbelschichtreaktoren, umfassend mindestens einen als zirkulierende Wirbelschicht ausgeführten Hauptreaktor und einen als zirkulierende Wirbelschicht ausgeführten Nebenreaktors, die getrennte Gasräume zur Durchführung chemischer Reaktionen darstellen und über einen zirkulierenden Feststoffstrom miteinander in Verbindung stehen, sowie eine einen Partikelabscheider umfassende Partikelleitung zum Transport von Wirbelschichtpartikeln vom Hauptreaktor in den Nebenreaktor. Die vorliegende Erfindung ist dadurch gekennzeichnet, dass der Hauptreaktor und der Nebenreaktor jeweils in der unteren Hälfte über eine fluidisierte Partikelleitung miteinander in hydraulischem Kontakt stehen. Insbesondere verbindet die Leitung vom Nebenreaktor in den Hauptreaktor die unteren Drittel oder Viertel dieser Reaktoren, vorzugsweise unterhalb der Füllstände der Festbette, die bei Abschalten der Fluidisierung im Reaktorsystem vorliegen.

In speziellen Ausführungsformen des erfindungsgemäben Systems verbindet die Leitung die Böden der beiden Reaktoren. "unten" und "oben" sind im Sinne der Schwerkraft bzw. der Flussrichtung des einströmenden Fluids (oder Reaktions-, Trägerfluids bzw. -gas) zu verstehen, da der Fluidstrom die Partikel gegen die Schwerkraft in der Wirbelschicht hält. In speziellen Ausführungsformen sind zusätzlich mechanische Vorrichtungen (z.B. Klappen oder Schieber) zur Beeinflussung des Strömungswiderstandes in der Partikelleitung zum Transport von Wirbelschichtpartikeln vom Hauptreaktor in den Nebenreaktors vorgesehen.

Bei der Erfindung handelt es sich allgemein um ein Reaktorsystem bestehend aus mindestens zwei kommunizierenden, schnell fluidisierten Wirbelschichten in zwei Reaktoren mit neuartiger Führung des umlaufenden Feststoffstromes, wobei der Umsatz chewischer Reaktionen durch den hohen Partikelanteil und die hohe Gasverweilzeit in den Reaktionszonen optimiert wird. Zugleich zeigt das System ein gutes Regelverhalten im Bezug auf die Partikelverteilung im System.

Vorteile des erfindungsgemäβen Systems liegen zusätzlich darin, dass z.B. die Fluidisierung des zweiten Reaktors (Nebenreaktor) bzw. optional weiterer Reaktoren optimal an die reaktionstechnischen Erfordernisse angepasst werden kann, ohne dass dadurch der globale Feststoffumlauf beeinflusst wird; dass der Aufenthaltsort des Feststoffes im System ein stabiles Verhalten aufweist und nicht unter ständiger Überwachung geregelt werden muss; dass der globale Feststoffumlauf einfach durch die Vertrimmung des Fluidisierungsfluids bzw. -gases über die Höhe des partikeltransportierenden Reaktors (Hauptreaktor) hinweg eingestellt werden kann und dass die Ausführungen der nicht Für den globalen Partikeltransport verantwortlichen Reaktoren (Nebenreaktor und ggf. weitere Reaktoren) auf geringe mechanische Beanspruchung der Partikel hin optimiert werden können.

Insbesondere betrifft die vorliegende Erfindung ein System von Reaktoren mit Wirbelschichten, wobei der Hauptreaktor und der Nebenreaktor über eine fluidisierte Verbindung (die zur Abdichtung der Gasräume der beiden Reaktoren z.B. mit einem Inertgas fluidisiert ist und z.B. als Siphon, Verbindungsrutsche oder Verbindungsrinne ausgeführt sein kann) direkt miteinander in hydraulischem Kontakt stehen, d.h. die Wirbelschichten bzw. die Füllstände des Haupt- und des Nebenreaktors können sich einander angleichen. Insbesondere bevorzugt sind die Partikel Feststoffpartikel und/oder das eingelassene Fluid ein Gas, insbesondere geeignet zur Fluidisierung der Partikel in einer (z.B. turbulenten oder schnell fluidisierten) Wirbelschicht.

Alternativ dazu kann die Partikelrückführung des Nebenreaktors auch in den Hauptreaktor oder, bei Verwendung einer geeigneten Vorrichtung zur Aufteilung des Partikelstromes, teilweise in den Nebenreaktor und teilweise in den Hauptreaktor führen. Demgemäß betrifft eine bevorzugte Ausführungsform ein erfindungsgemäßes System, welches dadurch gekennzeichnet ist, dass die einen Partikelabscheider umfassende Partikelleitung zum Transport von Wirbelschichtpartikeln vom Hauptreaktor in den Nebenreaktor auch einen Teil des Partikelstromes, unter Verwendung einer geeigneten Vorrichtung zur Aufteilung des Partikelstromes, direkt in den Hauptreaktor zurückführt. In bevorzugten Ausführungsformen weist der Nebenreaktor eine Partikelrückführung auf, die die Partikel der Wirbelschicht des Nebenreaktors einen beliebigen Wirbelschichtreaktor zurückleitet oder, bei Verwendung einer geeigneten Vorrichtung zur Aufteilung des Partikelstromes, in verschiedene Wirbelschichtreaktoren zurückleitet.

Die Partikelrückführung des Nebenreaktors umfasst Kanäle oder Leitungen, die gesondert vom Reaktor z.B. nach Partikelabscheidern (z.B. Fliehkraft- oder Schwerkraftabscheider) geschaltet werden, und wieder in den Reaktor (Haupt- oder Nebenreaktor) führen. Vorzugsweise ist die verbindende Leitung im unteren Bereich der Reaktoren zum Transport von Wirbelschichtpartikeln vom Nebenreaktor in den Hauptreaktor unabhängig von der Partikelrückführung des Nebenreaktors vorgesehen.

Dementsprechend wird der global zirkulierende Partikelstrom vom Hauptreaktor ausgetragen, aus dem Fluidstrom abgeschieden und über eine eventuell vorhandene Abdichteinrichtung zum Nebenreaktor geleitet, von wo aus die Partikel über die Leitung im unteren Bereich der Reaktoren zurück in den Hauptreaktor gelangen, während die gegebenenfalls aus dem Nebenreaktor ausgetragenen Partikel nach Abscheidung aus dem Fluidstrom wieder in den Nebenreaktor (oder ganz oder teilweise in den Hauptreaktor) geleitet werden. Ebenso besteht die Möglichkeit, einen Teil des Partikelstromes vom Hauptreaktor in den Nebenreaktor, über eine geeignete Vorrichtung zur Aufteilung des Partikelstromes, in den Hauptreaktor zurückzuführen.

Dem Reaktorsystem kann ein oder mehrere weitere Wirbelschichtreaktoren ähnlich dem Nebenreaktor hinzugefügt werden, der (die) wiederum mit dem Haupt- und/oder dem Nebenreaktor über eine geeignet ausgeführte Verbindung in hydraulischem Kontakt steht und die zirkulierenden Partikel aus dem Hauptreaktor nach Abtrennung aus dem Hauptstrom entweder in einen der Nebenreaktoren oder über eine geeignete Einrichtung zur Auftrennung des Partikelstromes auf mehrere Nebenreaktoren verteilt eingebracht werden. Es ist also möglich mehrere Nebenreaktoren parallel durch stromteilende und stromsammelnde Verbindungselemente zu führen.

Alternativ oder ergänzend dazu kann ein oder mehrere weitere Wirbelschichtreaktoren so mit dem System bestehend aus Haupt - und Nebenreaktor verbunden werden, dass der Nebenreaktor für diesen (diese) zusätzlichen Reaktor (Reaktoren) die Funktion eines Hauptreaktors übernimmt. Das heißt die Partikelrückführung des (primären) Nebenreaktors mündet in einen weiteren Nebenreaktor. Vom zusätzlichen Nebenreaktor bzw. den zusätzlichen Nebenreaktoren werden die Partikel wieder in den vorhergehenden Nebenreaktor oder in einen anderen Nebenreaktor oder in den Hauptreaktor geleitet, z.B. über eine Verbindungsleitung im unteren Bereich der jeweiligen Reaktoren wie für Hauptreaktor und (primären) Nebenreaktor hierin beschrieben ist. In speziellen Ausführungsformen sind zusätzlich mechanische Vorrichtungen (z.B. Klappen oder Schieber) zur Beeinflussung des Strömungswiderstandes in der Partikelleitung zum Transport von Wirbelschichtpartikeln zwischen dem zusätzlichen Nebenreaktor und dem primären Nebenreaktor bzw. zwischen dem zusätzlichen Nebenreaktor und dem Hauptreaktor vorgesehen. Gemäß dieser Ausführungsform weist ein Nebenreaktor eine Partikelleitung auf, die Partikel der Wirbelschicht des Nebenreaktors zumindest zum Teil oder vollständig in einen weiteren Nebenreaktor leitet.

In besonderen Ausführungsformen können die weiteren Nebenreaktoren an der Leitung vom Hauptreaktor in den primären Nebenreaktor (welcher im unteren Bereich mit dem Hauptreaktor verbunden ist) zwischengeschaltet werden. Gemäß diesem Beispiel wird also die oben beschriebene Partikelleitung vom Hauptreaktor in den (primären) Nebenreaktor über einen oder mehrere weitere Nebenreaktoren geführt.

Im speziellen führt bei solchen Systemen mit zusätzlichen Nebenreaktoren entweder von zumindest einem Nebenreaktor eine Partikelleitung in einen weiteren Nebenreaktor, oder die Partikelleitung vom Hauptreaktor zum Nebenreaktor führt zusätzlich zumindest teilweise in einen weiteren Nebenreaktor bzw. in weitere Nebenreaktoren, sowie Kombinationen hiervon. Weiters kann die Partikelrückführung des Nebenreaktors oder die Partikelleitung des Hauptreaktors in den Nebenreaktor einen Partikelstromteiler aufweisen, der vorzugsweise eine Gassperre, besonders bevorzugt einen Siphon, insbesondere bevorzugt mit einer Inertgas-Fluidisierung, umfasst.

Im Hauptreaktor und im Nebenreaktor bzw. in den Nebenreaktoren sind (Träger-) Fluideinlässe, vorzugsweise Gaseinlässe (wie z.B. Düsen, Gaslanzen oder Ähnliches), zur Bildung der Wirbelschichten vorgesehen. Die Einlassströme in den beiden Reaktoren können durch die erfindungsgemäße Kopplung der Reaktoren unabhängig voneinander gewählt werden und optimal an die reaktionstechnischen Erfordernisse angepasst werden. Insbesondere kann die Partikelzirkulation im Nebenreaktor unabhängig vom Haupt-Partikelkreislauf (vom Hauptreaktor über den/die Nebenreaktor(en) zurück in den Hauptreaktor) eingestellt werden, da durch die Leitung im unteren Bereich der Reaktoren Partikel unabhängig von der Partikelzirkulation im Nebenreaktor zurück in den Hauptreaktor geführt werden. Durch das Bestreben der Wirbelschichten in den hydraulisch verbundenen Reaktoren gleiche "gedachte Füllhöhen" (d.h. gleiche durch den Partikelinhalt bestimmte Gasdruckverluste) aufzuweisen wird eine Ansammlung von Partikeln in einem der beiden Reaktoren vermieden.

Im Hauptreaktor und im Nebenreaktor (in den Nebenreaktoren) sind Fluideinlässe, vorzugsweise Gaseinlässe, zur Bildung der Wirbelschichten vorgesehen. Insbesondere bevorzugt weisen der Hauptreaktor und/oder der Nebenreaktor mehrere Fluideinlässe, vorzugsweise Gaseinlässe, auf, die gestaffelt oder in der Höhe des jeweiligen Reaktors zueinander versetzt sind, beziehungsweise gestuft in mehreren Ebenen entlang der Reaktorhöhe angeordnet sind. Durch diese Einlässe gelangt Fluid, vorzugsweise Gas, in die Reaktoren, z.B. als Reaktionspartner oder Inertgas, zum Transport der Partikel, aber vor allem zur Bildung der Wirbelschichten.

Vorzugsweise mündet die Partikelrückführung des Nebenreaktors in den Nebenreaktor unterhalb eines Einlasses der Partikelleitung zum Transport von Wirbelschichtpartikeln vom Hauptreaktor in den Nebenreaktor. Insbesondere bevorzugt mündet die Partikelleitung zum Transport von Wirbelschichtpartikeln vom Hauptreaktor in den Nebenreaktor oberhalb der Leitung zum Transport von Wirbelschichtpartikel vom Nebenreaktor in den Hauptreaktor in den Nebenreaktor ein. Besonders bevorzugt wird, wenn die Leitung zum Transport von Wirbelschichtpartikel vom Nebenreaktor in den Hauptreaktor im unteren Bereich des Hauptreaktors, vorzugsweise in der unteren Hälfte, dem unteren Drittel oder dem unteren Viertel, einmündet. Hinsichtlich der Fluideinlässe wird bevorzugt, wenn die Leitung zum Transport von Wirbelschichtpartikeln vom Nebenreaktor in den Hauptreaktor möglichst weit unten, jedoch oberhalb eines untersten Fluideinlasses in den Hauptreaktor einmündet. Bei speziellen Ausführungen kann eine Fluidisierung im Bereich der Verbindungsleitung diesen untersten Fluideinlass in den Hauptreaktor ersetzen. Für den Nebenreaktor gilt ähnliches: So wird bevorzugt, dass die Leitung zum Transport von Wirbelschichtpartikel vom Nebenreaktor in den Hauptreaktor von der unteren Hälfte, vorzugsweise vom unteren Drittel oder dem unteren Viertel, des Nebenreaktors ausleitet. Hinsichtlich der Fluideinlässe wird bevorzugt, wenn die Leitung zum Transport von Wirbelschichtpartikeln vom Nebenreaktor in den Hauptreaktor möglichst weit unten, jedoch oberhalb einem untersten Fluideinlasses aus dem Nebenreaktor austritt. Bei speziellen Ausführungen kann eine Fluidisierung im Bereich der Verbindungsleitung diesen untersten Fluideinlass in den Nebenreaktor ersetzen.

Unabhängig davon kann die Partikelrückführung des Nebenreaktors einen Partikelabscheider (z.B. Schwer- oder Fliehkraftabscheider) umfassen, vorzugsweise einen Zyklon. Ebenso kann die Partikelleitung vom Hauptreaktor in den Nebenreaktor einen Partikelabscheider (z.B. Schwer- oder Fliehkraftabscheider) umfassen, vorzugsweise einen Zyklon.

Zusätzlich umfasst in speziellen Ausführungsformen die Leitung zum Transport von Wirbelschichtpartikeln vom Nebenreaktor in den Hauptreaktor eine Gassperre, vorzugsweise einen Siphon. In analoger Weise kann die Partikelleitung vom Hauptreaktor in den Nebenreaktor bzw. die Partikelrückführung des Nebenreaktors eine Gassperre, vorzugsweise einen Siphon, umfassen. Die Gassperren können jeweils auch unabhängig voneinander einen Inertgas-Einlass aufweisen, insbesondere zur Fluidisierung der Partikel oder um den Reaktorgasstrom durch die Sperre zu blockieren. Allgemein dienen Gassperren oder auch Abdichtelemente genannt dazu, den Gasfluss bzw. Gasaustausch zwischen den Reaktoren zu verhindern.

Weiters wird bevorzugt, wenn die Leitung zum Transport von Wirbelschichtpartikeln vom Nebenreaktor in den Hauptreaktor eine Inertgas-Partikelfluidisierung umfasst, um den Partikelstrom zumindest teilweise fluidisiert zu halten. Insbesondere wenn die Partikel von unten in den Hauptreaktor geleitet werden, können die Partikel damit in Bewegung gehalten werden. Alternativ oder zusätzlich kann der Partikelstrom z.B. über eine Rutsche oder einen abwärts laufenden Kanal (zumindest teilweise) geleitet werden. Ebenfalls wird bevorzugt, wenn die Partikelleitung vom Hauptreaktor in den Nebenreaktor und/oder die Partikelrückführung des Nebenreaktors eine Inertgas-Partikelfluidisierung umfassen. Als Inertgas ist hier ein Gas zu verstehen, dass im Bezug auf das jeweilige Verfahren in keinem der beiden Reaktoren eine stark negative Wirkung entfaltet. Im Fall von thermochemischen Umwandlungsverfahren oder Chemical Looping Prozessen wäre als ein solches Gas beispielsweise Wasserdampf anzusehen.

In bevorzugten Ausführungen mit mehreren Reaktoren weist eine Partikelrückführung eines Nebenreaktors einen Partikelstromteiler und/oder die Partikelrückführung des Hauptreaktors einen Partikelstromteiler auf, der vorzugsweise eine Gassperre, besonders bevorzugt einen Siphon, insbesondere bevorzugt mit Inertgas-Einlass, umfasst. Mithilfe eines oder mehrerer Partikelstromteiler ist es möglich weitere Reaktoren in das System anzukoppeln, seriell oder parallel.

Es kann auch ein weiterer Wirbelschichtreaktor, z.B. ein stationärer Wirbelschichtreaktor, der vorzugsweise einen Wärmeaustauscher aufweist ("Wirbelschichtwärmeüberträger"), im Partikelstrom untergebracht werden, z.B. im Bereich des Partikelstromes vom Hauptreaktor zum Nebenreaktor, wobei ggf. unter Verwendung einer geeigneten Einrichtung zur Auftrennung des Partikelstromes auch nur ein Teil des Partikelstromes über diesen zusätzlichen Wirbelschichtreaktor geleitet wird. Daher weisen in speziellen Ausführungen die Partikelrückführung vom Hauptreaktor in den Nebenreaktor und/oder eine Leitung zum Transport von Wirbelschichtpartikel vom Nebenreaktor in den Hauptreaktor und/oder die Partikelleitung zum Transport von Wirbelschichtpartikeln vom Nebenreaktor in den Hauptreaktor einen Wärmeaustauscher, vorzugsweise in einer stationären Wirbelschicht, auf. Solche zusätzliche Wirbelschichtreaktoren entlang des Partikelstromes können jeweils unter Verwendung einer Einrichtung zur Auftrennung des Partikelstromes auch nur von einem Teil des an der jeweiligen Einbaustelle vorhandenen Partikelstromes durchflossen werden. Der restliche Partikelstrom wird in diesem Fall entweder im Bypass am Wirbelschichtwärmeaustauscher vorbei oder auf anderem Wege in den Haupt- oder in einen Nebenreaktor geleitet.

Die vorliegende Erfindung betrifft des weiteren ein Verfahren zur Beförderung von Partikel durch ein Wirbelschichtreaktorsystem, wobei Partikel, insbesondere Feststoffpartikel, durch eine Wirbelschicht im Hauptreaktor und eine Wirbelschicht im Nebenreaktor geführt werden und zumindest teilweise vom Nebenreaktor über eine Leitung im unteren Bereich des jeweiligen Reaktors in den Hauptreaktor transportiert werden. Vorzugsweise werden dabei die Fluidmengenströme an den Fluideinlässen des Nebenreaktors unabhängig von den Fluidmengenströmen an den Fluideinlässen des Hauptreaktors frei gewählt. Der globale Partikelstrom vom Hauptreaktor in den Nebenreaktor und von dort in den Hauptreaktor zurück wird dabei wesentlich von den Fluidmengenströmen an den Fluideinlässen des Hauptreaktors, d.h. vom Partikeltransport im Hauptreaktor, bestimmt.
Andererseits ist der globale Partikelstrom weitgehend unabhängig von den Fluidmengenströmen an den Fluideinlässen des Nebenreaktors. Dieses Verhalten des erfindungsgemäßen Systems kann anhand von Versuchsergebnissen bestätigt werden.

Im erfindungsgemäßen Verfahren kann der Partikelaustrag aus den zirkulierenden Wirbelschichtreaktoren (Haupt- und Nebenreaktor) bei steigenden Gesamtfluidmengen durch die jeweiligen Fluideinlässe ansteigen. Bevorzugt ist das erfindungsgemäße Verfahren dadurch gekennzeichnet, dass der Partikelaustrag aus dem Hauptreaktor und dem Nebenreaktor bzw. den Nebenreaktoren bei Verlagerung der Fluidmengenstöme zu den weiter unten gelegenen Fluideinlässen erhöht wird und bei Verlagerung der Fluidmengenstöme zu den weiter oben gelegenen Fluideinlässen verringert wird.

Im erfindungsgemäßen Verfahren kann der Partikelaustrag aus den zirkulierenden Wirbelschichtreaktoren (Haupt- und Nebenreaktor) bei steigender Partikelmenge im Wirbelschichtsystem ansteigen. Weiters ist das Verfahren vorzugsweise dadurch gekennzeichnet, dass der Partikelaustrag aus den zirkulierenden Wirbelschichtreaktoren (Haupt- und Nebenreaktor) bei sinkender Korngröße der Partikel im Wirbelschichtsystem ansteigt.

Das Aufprägen eines Druckunterschiedes zwischen den Gasaustritten zweier Wirbelschichtreaktoren, die durch eine Verbindungsleitung zum Transport von Wirbelschichtpartikeln im unteren Bereich verbunden sind (z.B. Hauptreaktor und Nebenreaktor), kann aus Gründen der Hydrostatik die Verlagerung von Partikeln in Richtung des Reaktors mit geringerem aufgeprägtem Druck bewirken. Dadurch ergibt sich im Reaktor mit geringerem aufgeprägtem Druck ein höherer Partikelaustrag während sich gleichzeitig im Reaktor mit höherem aufgeprägten Druck ein geringerer Partikelaustrag ergibt. Solche zusätzlich aufgeprägte Druckunterschiede zwischen den Gasaustritten aus den Wirbelschichtreaktoren sind bevorzugt von der Größenordnung der von den Wirbelschichtpartikeln in den beteiligten Reaktoren verursachten Druckverluste, insbesondere bevorzugt kleiner als die von den Wirbelschichtpartikeln in den beteiligten Reaktoren verursachten Druckverluste.

Das erfindungsgemäße Verfahren erlaubt die Beeinflussung des globalen Partikelumlaufs zwischen Hauptreaktor und Nebenreaktor über eine Änderung des Strömungswiderstandes in der Leitung zum Transport von Wirbelschichtpartikeln vom Nebenreaktor in den Hauptreaktor. Speziell führt eine Erhöhung des Strömungswiderstandes zu einer Verringerung des Partikelumlaufes. Ähnliches gilt für den Partikelumlauf vom Nebenreaktor in einen weiteren Nebenreaktor, so ein solcher in einer speziellen Ausführung des Wirbelschichtsystems vorhanden ist. Die Beeinflussung des Strömungswiderstandes in einer Partikelleitung oder in einer in einer Partikelleitung vorgesehenen Gassperre (z.B. ein Siphon) wird bevorzugt durch Änderung des Fluidisierungszustandes der Partikelleitung bzw. der Gassperre erreicht. In speziellen Ausführungen des erfindungsgemäßen Systems sind zusätzlich mechanische Vorrichtungen (z.B. Klappen oder Schieber) zur Beeinflussung des Strömungswiderstandes in Partikelleitungen vorgesehen.

Konkrete Anwendungsgebiete für das beschriebene Reaktorsystem finden sich im Bereich der Chemischen Technologie und im Bereich der Energietechnik. Insbesondere eignet sich das Reaktorsystem für Anwendungen, in denen ein hoher globaler Partikel - oder Feststoffumlauf mit einem ausgeprägten Gas-Partikelkontakt in mehr als einer Reaktionszone kombiniert werden soll.

Die Unabhängigkeit des globalen Partikelumlaufs vom Fluidisierungszustand des Nebenreaktors ermöglicht die Optimierung des Gasumsatzes im Nebenreaktor.

Dies ist beispielsweise für das Chemical Looping Verfahren zur inherenten, quantitativen Kohlenstoffabscheidung bei Verbrennung kohlenstoffhaltiger Brennstoffe äußerst vorteilhaft. Dieses Verfahren wird derzeit als eine Schlüsseltechnologie zur international diskutierten Abscheidung von Kohlendioxid aus Verbrennungsprozessen gehandelt. Dabei werden Metalloxide als zirkulierender Feststoff eingesetzt und ermöglichen durch wiederholte Reduktion und Oxidation den Transport von Sauerstoff von einem Reaktor (Luftreaktor) zum anderen (Brennstoffreaktor). Der Vorteil des Verfahrens liegt darin, dass das Abgas des Brennstoffreaktors bei ausreichendem Gasumsatz nur aus CO₂ und H₂O besteht, wobei nach Kondensation des Wassers CO₂ direkt rein vorliegt. Es tritt kein zusätzlicher Energieaufwand im Vergleich zu einer direkten Verbrennung des Brennstoffes auf. Für dieses Verfahren ist die Erfindung direkt einsetzbar, und zwar für beliebige Anlagenkapazitäten, insbesondere für großindustrielle Kraftwerksprozesse. Sie ermöglicht einen robusten Anlagenbetrieb bei optimiertem Gas-Partikelkontakt in beiden Reaktoren.

Eine im Vergleich zu den bekannten Verfahren verbesserte Leistungsfähigkeit ist durch den Einsatz des erfindungsgemäßen Systems auch bei thermochemischen Umwandlungsverfahren (z.B. Pyrolyse, Vergasung) von Festbrennstoffen (z.B. Kohle, Biomasse) zu erreichen. Hier ermöglicht ein intensivierter Kontakt katalytisch aktiver Wirbelschichtpartikel mit dem Gas im Gaserzeugungsreaktor (entspricht dem Nebenreaktor, meist mit Wasserdampf und/oder rezirkuliertem Produktgas fluidisiert) einen weitgehenden Abbau von höheren Kohlenwasserstoffen (z.B. Teeren), die in den meisten Fällen in den nachfolgenden Prozessstufen unerwünscht sind. Gleichzeitig kann der erwünschte Energieeintrag vom Verbrennungsreaktor (entspricht dem Hauptreaktor, meist mit Luft fluidisiert) durch die Einstellung der Gasmengenströme an den Gaseinlässen des Verbrennungsreaktors und den davon beeinflussten Mengenstrom an vom Verbrennungs- zum Gaserzeugungsreaktor zirkulierenden Partikeln unabhängig von den Strömungsverhältnissen im Gaserzeugungsreaktor eingestellt werden.

Weitere Anwendungen der Erfindung finden sich im Bereich der selektiven Absorption von Komponenten aus Gasströmen durch Verwendung eines reaktiven Feststoffes (z.B. Carbonate-Looping zur CO₂-Abscheidung aus Verbrennungsabgasen). Hier kommt es ebenso auf einen guten Gas-Partikelkontakt und auf die Möglichkeit zur Abstimmung des globalen Partikelzirkulationsstromes an.

Die vorliegende Erfindung wird durch die folgenden Figuren und Ausführungsbeispiele näher erläutert ohne im speziellen darauf beschränkt zu sein.

### Figuren

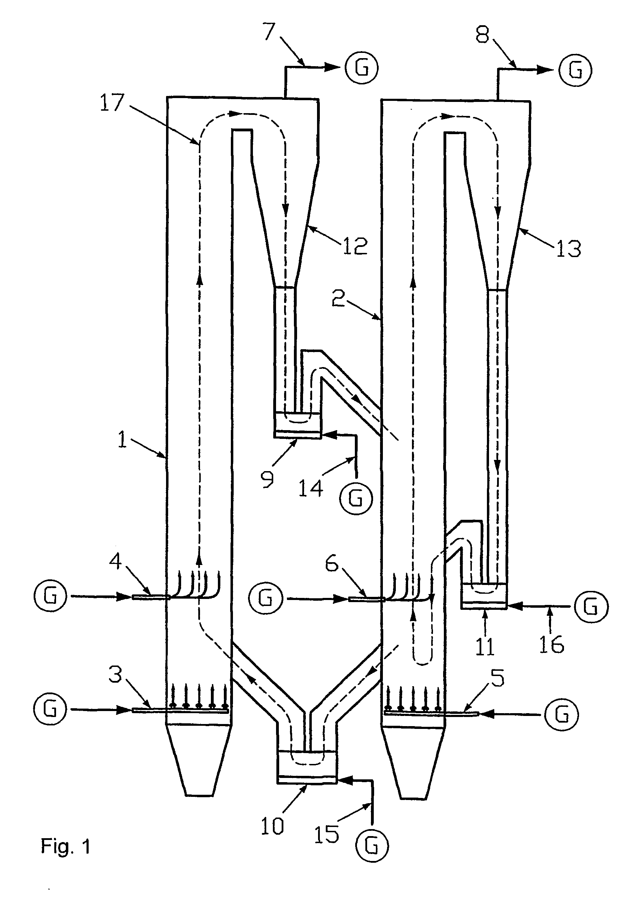

Fig. 1 zeigt eine Prinzipskizze für eine Anordnung des Wirbelschichtreaktorsystems mit zwei Reaktoren. Ein Partikelstrom (17) wird mittels eines Fluidisierungsmediums (ein Gas, reaktiv oder inert) von einem Hauptreaktor (1) (z.B. Feststoffförderreaktor) in einen Nebenreaktor (2) transportiert. Feststoffpartikel werden im Hauptreaktor durch ein durch die Gaseinlässe (3, 4), die z.B. als Düsenboden, Gaslanzen oder ähnliche Bauformen ausgeführt sein können, einströmendes Gas (G) in einer Wirbelschicht fluidisiert und kontinuierlich aus dem Reaktor ausgetragen. In einem Zyklon (12) werden die Partikel vom Gas getrennt, Letzteres wird über den Gasaustritt (7) abgeführt. Die abgetrennten Partikel gelangen in ein gasdichtes Abdichtelement (Siphon) (9) mit Inertgas-Einlass (14). Danach gelangen die Partikel in den Nebenreaktor (2), in dem sie durch einen Gasstrom (gestufte Gaseinlässe 5 und 6, die z.B. als Düsenboden, Gaslanzen oder ähnliche Bauformen ausgeführt sein können) wiederum in einer Wirbelschicht fluidisiert werden. Die vom Gasstrom im Nebenreaktor transportierten Partikel werden in Analogie zum Hauptreaktor am oberen Ende des Nebenreaktors (2) in einen Feststoffabscheider (z.B. Zyklon) (13) transportiert, in dem Gas des Nebenreaktors vom Partikelstrom abgetrennt und durch den Gasaustritt (8) abgeleitet wird. Die Partikel werden über ein (optionales) Abdichtelement (11), mit Inertgaseinlass (16) wieder in den Nebenreaktor zurückgeleitet. Zusätzlich weist der Nebenreaktor im unteren Bereich eine Austrittsöffnung zu einer Leitung zum Weitertransport der Partikel in den Hauptreaktor auf. Die Leitung umfasst zusätzlich ein Abdichtelement (10), das durch Fluidisierung der Partikel mittels eines Inertgasses (15) zur Abdichtung der Gasräume in Haupt- und Nebenreaktor ausgeführt ist. Diese Leitung befindet sich in dieser Ausführungsform zwischen den gestuften Gaszuführungen des Nebenreaktors (5, 6) und des Hauptreaktors (3, 4). Die Partikelstromeinlässe sind im Hauptreaktor oder im Nebenreaktor vorzugsweise im unteren Bereich, z.B. unterhalb der gedachten Oberfläche der Partikelschüttung bei Abschalten der Fluidisierung oder im unteren Viertel, im unteren Drittel oder der unteren Hälfte des Haupt- oder Nebenreaktors.

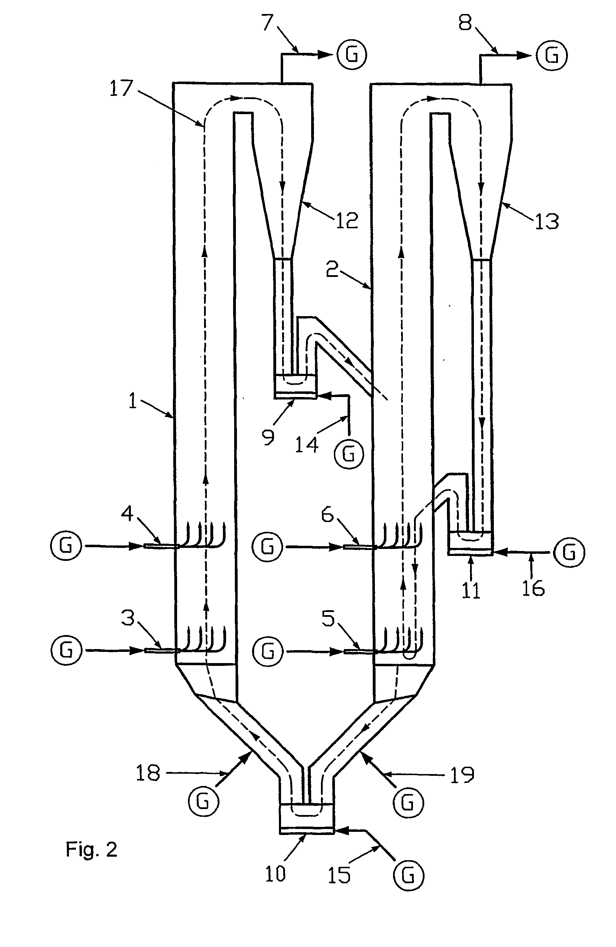

Fig. 2 zeigt eine Prinzipskizze für eine Anordnung des Wirbelschichtreaktorsystems mit zwei Reaktoren für Kleinanlagen. Diese Ausführung ist analog zu Fig. 1 geartet, mit dem Unterschied, dass sich die Verbindungsleitung vom Nebenreaktor in den Hauptreaktor unter den Gaszuführungen des Nebenreaktors (5, 6) und unter den Gaszuführungen des Hauptreaktors (3, 4) befindet. Zusätzlich kann der Partikeltransport über Gaszuführungen (18, 19) zur Stützfluidisierung begünstigt werden.

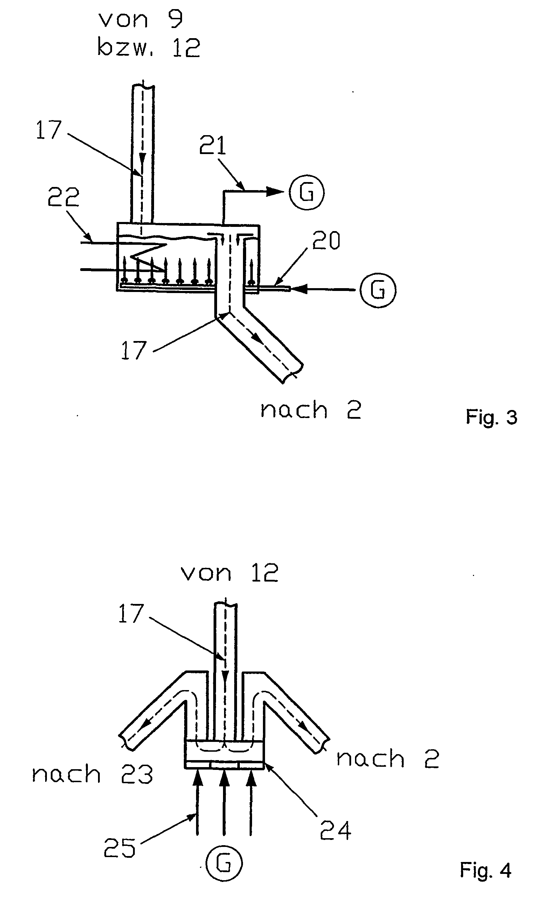

Fig. 3 zeigt das Schaltbild eines zusätzlichen stationären Wirbelschichtelements mit einem Wärmeaustauscher, das nach einem Partiklelabscheider (z.B. Zyklon) bzw. vor, nach oder in einer Gassperre (z.B. Siphon) untergebracht ist. Dabei gelangt der fluidisierte Partikelstrom (17) vom Partiklelabscheider (z.B. Zyklon) (12) oder Gassperre (z.B. Siphon) (9) in einen stationären Bereich, in dem Wärmeaustauscherflächen (22) mit dem fluidisierten Feststoff in Kontakt stehen. Von unten wird durch die Gaszuführung (20) ein Fluidisierungs- oder Inertgas zugeführt, welches nach Kontakt mit den Partikeln, bei dem es auch zu chemischen Reaktionen kommen kann, durch den Gasaustritt (21) abgeführt wird.

Fig. 4 zeigt das Schaltbild eines Partikelstromteilers z.B. für mehrere Nebenreaktoren. Dabei gelangt der fluidisierte Partikelstrom (17) z.B. vom Partikelabscheider (12) des Hauptreaktors (1) in einen Partikelstromteiler (24), z.B. ein geteilter Siphon, und wird durch ein eingeleitetes Fluidisierungsmedium (z.B. Inertgas) (25) aus dem Verteiler in zwei Reaktoren (2, 23) getragen. Ein nicht eingezeichneter Nebenreaktor (23) kann wie der Nebenreaktor (2) geartet sein, kann aber auch ein zusätzliches stationäres Wirbelschichtelement (z.B. ein Wärmeaustauscher) sein.

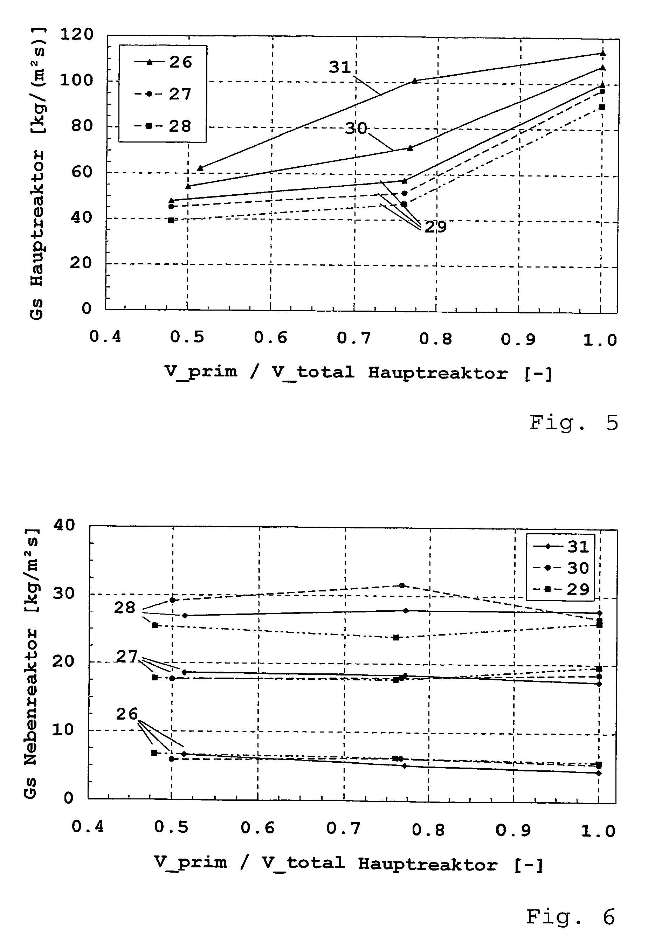

Fig. 5 zeigt die spezifische Partikeltransportrate (Gs in kg/(m2s)) des Hauptreaktors in Abhängigkeit von der Verteilung des Fluidisierungsmediums auf den unteren (3) und oberen (4) Fluideinlass des Hauptreaktors eines hydrodynamischen Modells des erfindungsgemäßen Wirbelschichtsystems nach Fig. 2, das mit Luft als Fluidisierungsmedium betrieben wird. Als Parameter im Diagramm sind einerseits unterschiedliche Gesamtfluidisierungsmengenströme in den Hauptreaktor (25 Nm3/h (29), 30 Nm3/h (30) und 35 Nm3/h (31)) und andererseits unterschiedliche Fluidisierungsmengenströme in den Nebenreaktor (10 Nm3/h (26), 15 Nm3/h (27) und 20 Nm3/h (28)) dargestellt. Der Nebenreaktor wird in diesem speziellen Fall nur über den unteren Fluideinlass (5) fluidisiert. Es zeigt sich eine klare Abhängigkeit des Partikeltransportes im Hauptreaktor vom Gesamtfluidisierungsmengenstrom in den Hauptreaktor und von der Verteilung des Fluidisierungsmediums auf den unteren (3) und oberen (4) Fluideinlass des Hauptreaktors. Insbesondere zeigt sich, dass der Partikeltransport im Hauptreaktor stark zunimmt, wenn der Gesamtfluidisierungsmengenstrom in den Hauptreaktor erhöht wird. Weiters ist ersichtlich, dass eine Zunahme der Fluidisierungsmediumsmenge in den unteren Fluideinlass (3) bei konstantem Gesamtfluidisierungsmengenstrom ebenfalls zu einer starken Zunahme des Partikeltransports führt. Die Fluidisierung des Nebenreaktors hat nur einen geringen Einfluss auf den Partikeltransport im Hauptreaktor. Dieser Einfluss kann dadurch erklärt werden, dass eine erhöhte Fluidisierung im Nebenreaktor einen erhöhten Druckverlust im Nebenreaktor bewirkt und damit die Verschiebung von Feststoffpartikeln durch die Verbindungsleitung vom Nebenreaktor in den Hauptreaktor begünstigt.

Fig. 6 zeigt die spezifische Partikeltransportrate (Gs in kg/(m2s)) des Nebenreaktors in Abhängigkeit von der Verteilung des Fluidisierungsmediums auf den unteren (3) und oberen (4) Fluideinlass des Hauptreaktors eines hydrodynamischen Modells des erfindungsgemäßen Wirbelschichtsystems nach Fig. 2, das mit Luft als Fluidisierungsmedium betrieben wird. Als Parameter im Diagramm sind einerseits unterschiedliche Gesamtfluidisierungsmengenströme in den Hauptreaktor (25 Nm3/h (29), 30 Nm3/h (30) und 35 Nm3/h (31)) und andererseits unterschiedliche Fluidisierungsmengenströme in den Nebenreaktor (10 Nm3/h (26), 15 Nm3/h (27) und 20 Nm3/h (28)) dargestellt. Der Nebenreaktor wird in diesem speziellen Fall nur über den unteren Fluideinlass (5) fluidisiert. Es zeigt sich, dass der Feststoffpartikeltransport im Nebenreaktor nicht signifikant von der Verteilung des Fluidisierungsmediums auf unteren (3) und oberen (4) Fluideinlass im Hauptreaktor abhängt.
Der Gesamtfluidisierungsmengenstrom im Hauptreaktor wirkt sich ebenfalls nicht signifikant auf den Feststoffpartikeltransport im Nebenreaktor aus. Die Gesamtfluidisierungsmengenstrom im Nebenreaktor hat erwartungsgemäß eine direkte Auswirkung auf den Feststoffpartikeltransport im Nebenreaktor. Eine Erhöhung des Gesamtfluidisierungsmengenstrom im Nebenreaktor führt zu einem starken Anstieg des Feststoffpartikeltransport im Nebenreaktor.

### Beispiel :

Im Wirbelschichtreaktorsystem gemäß Fig. 1 wird der globale Partikelumlauf von einer zirkulierenden Gas-Feststoffpartikelwirbelschicht (1) mit, gegebenenfalls gestufter, Gaszuführung (3) (4) gesteuert (Hauptreaktor). Das Fluid befördert Feststoffpartikel über einen Gas-Feststoffabscheider (12) und, gegebenenfalls, über ein Abdichtelement (9) in die zweite Gas-Feststoffwirbelschicht (Nebenreaktor) (2). Die Rückführung des Feststoffes erfolgt über eine Siphonverbindung (10) bzw. über vergleichbare Verbindungselemente (z.B. fluidisierte Rutsche) im unteren Teil der Reaktoren. In einzelnen Fällen, meist bei Kleinanlagen, können die Reaktoren auch am tiefsten Punkt über einen Siphon miteinander verbunden sein (Fig. 2). Im Nebenreaktor (2) wird der Feststoff mit einem gasförmigen Medium fluidisiert, welches ebenfalls mehrstufig eingebracht werden kann (5) (6). Der aus dem Nebenreaktor ausgetragene Feststoff wird mit einem Gas-Feststoffabscheider (13) vom Gas getrennt und in denselben Reaktor zurückgeführt. Der Feststoffumlauf im Nebenreaktorsystem kann wiederum über die mehrstufige Gaszuführung (5) (6) verändert werden. Durch diese Schaltung ist der Feststofftransport zwischen den beiden Reaktoren maßgeblich von der Betriebsweise des Hauptreaktors abhängig (Fördermediumsstufung), allerdings weitgehend unabhängig von der Gasgeschwindigkeit und somit der Gasverweilzeit im Nebenreaktor (2). Durch die direkte hydraulische Verbindung der beiden Reaktoren über den unteren Siphon (10) trachtet das System stets danach in den beiden Reaktoren ein Füllstandsgleichgewicht zu erreichen, was den Aufenthaltsort des Feststoffes im System bestimmt. Durch Aufprägung eines Druckunterschiedes zwischen den beiden Reaktionszonen (z.B. durch eine Drosseleinrichtung am Gasaustritt aus dem Partikelabscheider des jeweiligen Wirbelschichtreaktors oder durch Maßnahmen am jeweiligen Gasstrom weiter stromabwärts wie z.B. einem Drosselventil, einer Klappe oder einem Saugzug) kann der Feststoffaufenthalt zusätzlich beeinflusst werden. Eine Erhöhung des Gasdruckes in einem der beiden Reaktoren bewirkt im Sinne der Hydrostatik eine Verschiebung des gedachten Partikelfüllstandes in den jeweils anderen Reaktor. Der gedachte Partikelfüllstand eines zirkulierenden Wirbelschichtreaktors beeinflusst den ausgetragenen Partikelmengenstrom. Im Falle des Hauptreaktors beeinflusst der gedachte Partikelfüllstand damit den globalen Partikelumlauf vom Haupt- zum Nebenreaktor. Eine weitere Einflussnahme auf den globalen Partikelumlauf vom Haupt zum Nebenreaktor kann durch Veränderung des Strömungswiderstandes in der fluidisierten Verbindungsleitung, in der die Partikel vom Nebenreaktor zurück in den Hauptreaktor gelangen, erfolgen. Der Strömungswiderstand in der Verbindungsleitung kann im Betrieb beispielsweise durch Veränderung der Fluidisierung im Bereich der Verbindung oder durch mechanische Vorrichtungen (z.B. Schieber oder Klappen) verändert werden. Ein erhöhter Strömungswiderstand in der Verbindungsleitung führt zu einem geringeren globalen Partikelumlauf vom Haupt- zum Nebenreaktor. Der Nebenreaktor kann im Bereich des Feststoffaustrittes und des Partikelabscheiders (13) auf einen geringen Partikelaustrag bei trotzdem hoher Partikelkonzentration am oberen Reaktorende hin ausgeführt werden. Das wird beispielsweise durch Überhöhung des Reaktors über die Gasaustrittsöffnung hinweg und eine geeignete Geometrie der Gasaustrittsöffnung erreicht.

Bei Verwendung von mehr als zwei Reaktoren kann von einer Grundschaltung nach Fig. 1 ausgegangen werden, wobei für die Anordnung der weiteren Reaktoren folgende Möglichkeiten, bzw. Kombinationen dieser Möglichkeiten, bestehen:
1. Im Bereich bzw. anstatt des oberen Siphons (9, Fig. 1) gelangt der Partikelstrom anschließend wieder in den in Fig. 1 dargestellten Nebenreaktor (2) über einen Zwischenreaktor, der z.B. als stationäre Wirbelschicht ausgeführt sein kann und in dem z.B. ein Wärmeaustauscher (Fig. 3) vorgesehen werden kann. Ein solcher zusätzlicher Zwischenreaktor kann unter Verwendung einer geeigneten Einrichtung zur Auftrennung des Partikelstromes auch nur einen Teil des umlaufenden Partikelstromes verwenden. Ein solcher zusätzlicher Wirbelschichtreaktor kann in analoger Weise auch in der Partikelrückführung des Nebenreaktors zurück zum Nebenreaktor oder in der fluidisierten Verbindungsleitung vom Nebenreaktor zum Hauptreaktor eingebaut werden.
2. Das System kann einen zusätzlichen Nebenreaktor (23), der wiederum mit den beiden Reaktoren aus Fig. 1 über eine fluidisierte Verbindung kommuniziert, umfassen. Der zirkulierende Partikelstrom aus dem Hauptreaktor kann dabei wiederum über eine geeignete Einrichtung zur Auftrennung des Partikelstromes (Fig. 4) in beide Nebenreaktoren eingebracht werden. Alternativ dazu kann der aus dem Nebenreaktor aus Fig. 1 ausgetragenene und vom Fluidstrom abgeschiedene Partikelstrom in den zusätzlichen Nebenreaktor geleitet werden.
3. Eine weitere Variationsmöglichkeit besteht bei der Partikelrückführung eines zusätzlichen Nebenreaktors, wobei der Partikelstrom aus diesem zusätzlichen Reaktor entweder in den Haupt- oder in den Nebenreaktor aus Fig. 1 zurückgeführt werden kann.

## Patentansprüche

1. Wirbelschichtreaktorsystem, bestehend aus mindestens zwei Wirbelschichtreaktoren, umfassend mindestens einen als zirkulierende Wirbelschicht ausgeführten Hauptreaktor (1) und mindestens einen als zirkulierende Wirbelschicht ausgeführten Nebenreaktor (2), die getrennte Gasräume zur Durchführung chemischer Reaktionen darstellen und über einen zirkulierenden Feststoffstrom miteinander in Verbindung stehen, sowie eine einen Partikelabscheider umfassende Partikelleitung zum Transport von Wirbelschichtpartikeln vom Hauptreaktor (1) in den Nebenreaktor (2), **dadurch gekennzeichnet, dass** der Hauptreaktor (1) und der Nebenreaktor (2) jeweils in der unteren Hälfte über eine fluidisierte Partikelleitung (10) miteinander in hydraulischem Kontakt stehen.

2. System nach Anspruch 1, **dadurch gekennzeichnet, dass** die einen Partikelabscheider umfassende Partikelleitung zum Transport von Wirbelschichtpartikeln vom Hauptreaktor (1) in den Nebenreaktor (2) unter Verwendung einer geeigneten Vorrichtung zur Aufteilung des Partikelstroms einen Teil des Partikelstroms direkt in den Hauptreaktor (1) zurückführt.

3. System nach Anspruch 1 oder 2, **dadurch gekennzeichnet, dass** der Nebenreaktor (2) eine Partikelrückführung aufweist, die Partikel der Wirbelschicht des Nebenreaktors (2) in einen beliebigen Wirbelschichtreaktor zurückleitet oder unter Verwendung einer geeigneten Vorrichtung zur Aufteilung des Partikelstroms in verschiedene Wirbelschichtreaktoren zurückleitet.

4. System nach einem der Ansprüche 1 bis 3, **dadurch gekennzeichnet, dass** die Leitung (10) den Boden des Nebenreaktors (2) mit dem Boden des Hauptreaktors (1) verbindet.

5. System nach einem der Ansprüche 1 bis 4, **dadurch gekennzeichnet, dass** die Leitung (10) oberhalb oder auf Höhe eines untersten Fluideinlasses (3) in den Hauptreaktor (1) einmündet, wobei gegebenenfalls die Fluidisierung der Leitung (10) diesen untersten Fluideinlass (3) ersetzt.

6. System nach einem der Ansprüche 1 bis 5, **dadurch gekennzeichnet, dass** die Leitung (10) eine Inertgas-Partikelfluidisierung (15) umfasst.

7. System nach Anspruch 6, **dadurch gekennzeichnet, dass** die Inertgas-Partikelfluidisierung (15) eine Wasserdampf-Fluidisierung ist.

8. System nach einem der Ansprüche 1 bis 7, **dadurch gekennzeichnet, dass** das System einen weiteren Nebenreaktor (23) umfasst, wobei entweder von zumindest einem Nebenreaktor (2) eine Partikelleitung in den weiteren Nebenreaktor (23) führt oder die Partikelleitung des Hauptreaktors (1) in den Nebenreaktor (2) zusätzlich zumindest teilweise in den weiteren Nebenreaktor (23) führt.

9. System nach Anspruch 8, **dadurch gekennzeichnet, dass** die Partikelrückführung des Nebenreaktors (2) oder die Partikelleitung des Hauptreaktors (1) in den Nebenreaktor (2) einen Partikelstromteiler (24) aufweist.

10. System nach einem der Ansprüche 1 bis 9, **dadurch gekennzeichnet, dass** die Partikelrtickführung (12, 9, 13, 11) und/oder die Partikelleitung (10) einen Wärmeaustauscher (22) aufweisen/aufweist.

11. Verfahren zur Beförderung von Partikeln durch ein Wirbelschichtreakiorsystem nach einem der Ansprüche 1 bis 10, **dadurch gekennzeichnet, dass** Feststoffpartikel durch eine Wirbelschicht im Hauptreaktor (1) und eine Wirbelschicht im Nebenreaktor (2) geführt werden und zumindest teilweise vom Nebenreaktor (2) über eine Partikelleitung (10) in der unteren Hälfte zurück in den Hauptreaktor (1) transportiert werden.

12. Verfahren nach Anspruch 11, **dadurch gekennzeichnet, dass** durch Aufprägen eines Druckunterschieds zwischen Hauptreaktor (1) und Nebenreaktor (2) Partikel in Richtung des Reaktors mit geringerem aufgeprägtem Druck verlagert werden und sich in diesem Reaktor dadurch ein höherer Partikelaustrag ergibt, während sich gleichzeitig im anderen Reaktor ein geringerer Partikelaustrag ergibt.

13. Verfahren nach Anspruch 11 oder 12, **dadurch gekennzeichnet, dass** der globale Partikelumlauf zwischen Hauptreaktor (1) und Nebenreaktor (2) durch eine Erhöhung des Strömungswiderstands in der Leitung (10) verringert wird.

## Claims

1. A fluidized bed reactor system consisting of at least two fluidized bed reactors, comprising at least one main reactor (1) in the form of a circulating fluidized bed and at least one secondary reactor (2) in the form of a circulating fluidized bed, said reactors constituting two separate gas-filled spaces for carrying out chemical reactions and being connected to each other via a circulating solids stream, as well as a particle line comprising a particle separator and serving to transport fluidized bed particles from the main reactor (1) into the secondary reactor (2),
**characterized in that** the main reactor (1) and the secondary reactor (2) are hydraulically connected via a fluidized particle line (10) in their lower halves.

2. The system according to claim 1, **characterized in that** the particle line comprising a particle separator and serving to transport fluidized bed particles from the main reactor (1) into the secondary reactor (2) recycles a portion of the particle stream directly into the main reactor (1), using an appropriate device for dividing the particle stream.

3. The system according to claim 1 or claim 2, **characterized in that** the secondary reactor (2) comprises a particle return loop which recycles the particles of the fluidized bed of the secondary reactor (2) into any fluidized bed reactor or, when an appropriate device for dividing the particle stream is used, into several fluidized bed reactors.

4. The system according to any one of the claims 1 to 3, **characterized in that** the line (10) connects the bottom of the secondary reactor (2) with the bottom of the main reactor (1).

5. The system according to any one of the claims 1 to 4, **characterized in that** the line (10) leads into the main reactor (1) at or above the level of a lowest fluid inlet (3), the fluidization of said line (10) optionally replacing said lowest fluid inlet (3).

6. The system according to any one of the claims 1 to 5, **characterized in that** the line (10) comprises an inert gas particle fluidizing means (15).

7. The system according to claim 6, **characterized in that** said inert gas particle fluidising means (15) is a water vapour particle fluidizing means.

8. The system according to any one of the claims 1 to 7, **characterized in that** the system comprises an additional secondary reactor (23), wherein a particle line from at least one secondary reactor (2) leads into said additional secondary reactor (23) or the particle line from the main reactor (1) to the secondary reactor (2) additionally leads, at least partially, into said additional secondary reactor (23).

9. The system according to claim 8, **characterized in that** the particle return loop of the secondary reactor (2) or the particle line from the main reactor (1) to the secondary reactor (2) comprises a particle stream divider (24).

10. The system according to any one of the claims 1 to 9, **characterized in that** the particle return loop (12, 9, 13, 11) and/or the particle line (10) comprise(s) a heat exchanger (22).

11. A method for transporting particles through a fluidized bed reactor system according to any one of the claims 1 to 10, **characterized in that** solid particles are carried through a fluidized bed in the main reactor (1) and a fluidized bed in the secondary reactor (2) and are at least partially recycled from the secondary reactor (2) to the lower half of the main reactor (1).

12. The method according to claim 11, **characterized in that**, by applying a pressure difference between the main reactor (1) and the secondary reactor (2), particles are shifted towards the reactor to which the lower pressure is applied, which results in a higher amount of particles being discharged from this reactor, while, at the same time, the amount of particles discharged from the other reactor is reduced.

13. The method according to claim 11 or claim 12, **characterized in that** the overall particle circulation between the main reactor (1) and the secondary reactor (2) is reduced by increasing the flow resistance in the line (10).

## Revendications

1. Système de réacteurs à lit fluidisé qui consiste en au moins deux réacteurs à lit fluidisé, comprenant au moins un réacteur principal (1) en forme de lit fluidisé circulant et au moins un réacteur secondaire (2) en forme de lit fluidisé circulant, les deux réacteurs constituant des espaces à gaz séparés pour effectuer des réactions chimiques et étant reliés par un flux circulant de matières solides, ainsi qu'un conduit de particules comprenant un séparateur de particules et servant à transporter particules du lit fluidisé du réacteur principal (1) au réacteur secondaire (2),
**caractérisé en ce que** le réacteur principal (1) et le réacteur secondaire (2) se trouvent en communication hydraulique via un conduit de particules fluidisé (10) dans leurs moitiés inférieures.

2. Système selon la revendication 1, **caractérisé en ce que** le conduit de particules comprenant un séparateur de particules et servant à transporter particules du lit fluidisé du réacteur principal (1) au réacteur secondaire (2) recycle une partie du flux de particules directement dans le réacteur principal (1) en utilisant un dispositif approprié à diviser le flux de particules.

3. Système selon la revendication 1 ou 2, **caractérisé en ce que** le réacteur secondaire (2) présente une boucle de recyclage de particules recyclant les particules du lit fluidisé du réacteur secondaire (2) dans un réacteur à lit fluidisé ou, utilisant un dispositif approprié à diviser le flux de particules, recyclant lesdits particules dans plusieurs réacteurs à lit fluidisé différents.

4. Système selon l'une des revendications 1 à 4, **caractérisé en ce que** le conduit (10) relie le fond du réacteur secondaire (2) au fond du réacteur principal (1).

5. Système selon l'une des revendications 1 à 4, **caractérisé en ce que** le conduit (10) entre dans le réacteur principal (1) au dessus ou au niveau d'un orifice d'admission de fluide (3) qui est l'orifice le plus bas, la fluidification du conduit (10) remplaçant éventuellement ledit orifice d'admission de fluide (3).

6. Système selon l'une des revendications 1 à 5, **caractérisé en ce que** le conduit (10) comprend un moyen de fluidification à gaz inerte (15).

7. Système selon la revendication 6, **caractérisé en ce que** le moyen de fluidification à gaz inerte (15) est un moyen de fluidification à vapeur d'eau.

8. Système selon l'une des revendications 1 à 7, **caractérisé en ce que** le système comprend un autre réacteur secondaire (23), un conduit de particules d'au moins un réacteur secondaire (2) menant audit autre réacteur secondaire (23) ou le conduit du réacteur principal (1) au réacteur secondaire (2) menant aussi, au moins partiellement, audit autre réacteur secondaire (23).

9. Système selon la revendication 8, **caractérisé en ce que** le boucle de recyclage de particules du réacteur secondaire (2) ou le conduit de particules du réacteur principal (1) au réacteur secondaire (2) présente un diviseur (24) du flux de particules.

10. Système selon l'une des revendications 1 à 9, **caractérisé en ce que** le boucle de recyclage de particules (12, 9, 13, 11) et/ou le conduit de particules (10) présente(nt) un échangeur de chaleur (22).

11. Procédé pour transporter des particules à travers un système de réacteurs à lit fluidisé selon l'une des revendications 1 à 10, **caractérisé en ce que** des particules solides sont transportés à travers un lit fluidisé dans le réacteur principal (1) et à travers un lit fluidisé dans le réacteur secondaire (2) et sont au moins partiellement recyclés du réacteur secondaire (2) dans le réacteur principal (1) via un conduit de particules (10) dans la moitié inférieure.

12. Procédé selon la revendication 11, **caractérisé en ce qu'**en appliquant une différence de pression entre le réacteur principal (1) et le réacteur secondaire (2), des particules sont déplacés vers le réacteur sur lequel une pression plus basse est appliquée, résultant en une décharge de particules plus élevée dans ce réacteur, alors que la décharge de particules est réduite dans l'autre réacteur en même temps.

13. Procédé selon la revendication 11 ou 12, **caractérisé en ce que** la circulation absolue de particules entre le réacteur principal (1) et le réacteur secondaire (2) est réduite par l'augmentation de la résistance d'écoulement dans le conduit (10).
